# EUROPÄISCHE PATENTSCHRIFT

(11) **EP 1 926 893 B1**
(45) Veröffentlichungstag und Bekanntmachung des Hinweises auf die Patenterteilung: **27.01.2010**
(21) Anmeldenummer: 06792207.0
(22) Anmeldetag: 22.09.2006
(51) Int. Cl.: F01N 3/28, B01J 35/04

(54) **WABENKÖRPER MIT STIRNSEITIGER HARTLOT-ZONE**
HONEYCOMB BODY WITH HARD SOLDER ZONE ON THE END FACE
CORPS ALVEOLAIRE COMPRENANT UNE ZONE DE SOUDURE FORTE COTE FRONTAL

(30) Priorität: 23.09.2005 DE 102005045492
(43) Veröffentlichungstag der Anmeldung: 04.06.2008
(73) Patentinhaber: Emitec Gesellschaft für Emissionstechnologie mbH, 53797 Lohmar (DE)
(72) Erfinder: WIERES, Ludwig, 51491 Overath (DE); GUTOWSKI, Jörg, 99817 Eisenach (DE); VOIT, Michael, 51375 Leverkusen (DE); KURTH, Ferdi, 53894 Mechernich (DE)
(74) Vertreter: Rössler, Matthias
(86) Internationale Anmeldenummer: PCT/EP2006/009198
(87) Internationale Veröffentlichungsnummer: WO 2007/036326

(56) Entgegenhaltungen:
- EP-A- 0 486 276
- DE-A1- 4 241 469
- JP-A- 2 261 550

## Beschreibung

Die vorliegende Erfindung betrifft einen Wabenkörper mit zwei gegenüberliegenden Stirnseiten, der zumindest ein Gehäuse und wenigstens eine Kanäle bildende metallische Lage umfasst. Der Wabenkörper ist an zumindest einer Stirnseite innerhalb einer Zone hartgelötet. Bevorzugtes Einsatzgebiet für derartige Wabenkörper ist die Abgasnachbehandlung mobiler Verbrennungskraftmaschinen.

Bei derartigen Wabenkörpern wird das Gehäuse üblicherweise mit einem dickwandigen Mantelrohr ausgeführt, wobei die metallische Lage üblicherweise zumindest eine, zumindest teilweise strukturierte, Metallfolie umfasst. Im Hinblick auf das Einsatzgebiet der Wabenkörper werden diese Komponenten hohen thermischen und dynamischen Wechselbeanspruchungen unterzogen. Deshalb ist es wichtig, eine dauerhafte Verbindung der metallischen Lage mit dem Gehäuse bzw. der Lagen untereinander zu gewährleisten. Hierbei ist z.B. aus der DE-A1-33 12-944 bekannt, nicht den gesamten Wabenkörper mit dem Gehäuse zu verlöten, sondern lediglich Teilbereiche davon, so dass die nicht verlöteten Teilbereiche in Maßen unterschiedliches thermisches Ausdehnungsverhalten kompensieren können. Diese räumlich verteilten, verlöteten Teilbereiche werden zusammen auch als Lötmuster bezeichnet.

Insbesondere bei relativ großen Wabenkörpern, die mit großen Durchmessern aber einer geringen axialen Länge aufgeführt sind, traten jedoch gelegentlich nach der Fertigstellung Verbindungsfehler im Randbereich zwischen den metallischen Lagen und dem Gehäuse auf. Insbesondere konnte teilweise eine Ablösung der metallischen Lagen von dem Gehäuse festgestellt werden, so dass an dieser Stelle eine Art Spalt vorlag. Dieser Spalt hat jedoch bei langzeitiger Belastung des Wabenkörpers unter Umständen ein Bauteilversagen zur Folge.

Hiervon ausgehend ist es Aufgabe der vorliegenden Erfindung, die geschilderten technischen Probleme zumindest teilweise zu lösen. Insbesondere soll ein Wabenkörper bzw. ein Verfahren zur dessen Herstellung angegeben werden, welches auch bei einem ungünstigen Durchmesser/Längen-Verhältnis eine gute Anbindung der metallischen Lage bzw. Lagen an das Gehäuse gewährleistet. Gleichzeitig soll der Wabenkörper eine gute Kompensation von unterschiedlichem thermischen Ausdehnungsverhalten der Komponenten des Wabenkörpers sowie eine hohe Festigkeit bzw. Flexibilität im Hinblick auf die thermische und dynamische Wechselbeanspruchung aufweisen.

Diese Aufgaben werden gelöst mit einem Wabenkörper mit den Merkmalen des Patentanspruches 1 sowie einem Verfahren mit den Schritten gemäß Patentanspruch 8. Vorteilhafte Ausgestaltungen der Erfindung sind in den abhängig formulierten Patentansprüchen beschrieben, wobei die dort einzeln aufgeführten Merkmale in beliebiger, technologisch sinnvoller, Weise miteinander kombiniert werden können und weitere Ausgestaltungen der Erfindung aufzeigen.

Der erfindungsgemäße Wabenkörper mit zwei gegenüberliegenden Stirnseiten umfasst zumindest ein Gehäuse und wenigstens eine Kanäle bildende metallische Lage, wobei der Wabenkörper nur an mindestens einer Stirnseite wenigstens eine hartgelötete Zone innerhalb der wenigstens einen Lage aufweist. Diese Zone ist nun so gestaltet, dass sie einen am Gehäuse angrenzenden, bandförmigen lotfreien Bereich bildet wobei der bandförmige lotfreie Bereich eine Mehrzahl von der mindestens einen Lage gebildeten Kanäle umfasst, und weiter nur in wenigstens einem, von den Stirnseiten beabstandeten, Teilabschnitt Hartlotverbindungen zwischen der wenigstens einen Lage und dem zumindest einen Gehäuse vorgesehen sind.

Mit "Stirnseiten" sind insbesondere die Seiten des Wabenkörpers gemeint, von denen aus sich Kanäle in innere Bereiche des Wabenkörpers erstrecken. Je nach Gestalt des Wabenkörpers kann die Stirnfläche im Wesentlichen eben oder auch zumindest teilweise mit Erhebungen und/oder Senken ausgebildet sein. Zusätzlich ist auch möglich, dass die Stirnseite eine runde, ovale, in etwa eckige oder eine andere Form hat. Bevorzugt sind beide Stirnseiten im Hinblick auf die Form und die Vorsehung einer gelöteten Zone gleichartig ausgeführt.

Zur Erläuterung sei an dieser Stelle darauf hingewiesen, dass mit "hartlöten" bzw. "löten" stets eine Verbindungstechnik mit Hartlot bei Temperaturen oberhalb von 450°C gemeint ist. Grundsätzlich können an einer Stirnseite mehrere gelötete Zonen vorhanden sein, wobei in diesem Fall jedoch eine den äußeren lotfreien Bereich bildet. Zum Beispiel können mehrere konzentrische Zonen vorgesehen sein oder eine äußere Begrenzung der Zone bestimmt den lotfreien Bereich, während mit ihrer inneren Begrenzung an eine oder mehrere weitere Zonen angeschlossen wird.

Die explizite Form der gelöteten Zone und des lotfreien Bereiches orientiert sich bevorzugt an der Gestalt des Wabenkörpers bzw. des Gehäuses selbst. Ist der Wabekörper beispielsweise mit einem runden Querschnitt ausgeführt, so ist bevorzugt auch die eine Zone rund und der lotfreie Bereich damit ringförmig. In entsprechender Weise erfolgt eine Anpassung der Zone an eine nicht zylindrische Gestalt des Wabenkörpers, wobei nach Möglichkeit der bandförmige lotfreie Bereich mit einer im Wesentlichen konstanten Breite ausgeführt ist. Der bandförmige lotfreie Bereich verläuft dabei direkt am Gehäuse um dessen Innenumfang herum. Dabei umfasst der Bereich zumindest einen Abschnitt der metallischen Lage bzw. eine Mehrzahl von damit gebildeten Kanälen. Bei einer solchen Ausgestaltung des Wabenkörpers treten die eingangs beschriebenen Probleme nicht mehr auf.

Dies gilt insbesondere für Wabenkörper, bei denen die zwei gegenüberliegenden Stirnseiten eine Länge des Wabenkörpers begrenzen und der Wabenkörper eine maximale Erstreckung senkrecht zur Länge aufweist, wobei ein Verhältnis von Erstreckung zu Länge mindestens 2 beträgt. Damit sind insbesondere Wabenkörper gemeint, deren maximale Erstreckung des Querschnitts deutlich größer gegenüber der Länge des Wabenkörpers ist. So liegt die maximalen Erstreckung z.B. bei im Wesentlichen zylindrischen Wabenkörpern bei mindestens 100 mm oder sogar bei 200 mm bzw. bis etwa 400 mm. Gleichzeitig weisen die Wabenkörper dann beispielsweise nur eine maximale Länge von etwa 50 mm bis 70 mm auf. Insoweit kann das Verhältnis von Erstreckung zur Länge auch mindestens 3,5 oder sogar über 5 betragen. Gerade bei solchen Ausgestaltungen des Wabenkörpers ist das hier vorgeschlagene Lötmuster überraschend, denn das innen liegende große Volumen des Wabenkörpers muss gleichzeitig bei den hohen thermischen und dynamischen Belastungen dauerhaft gehalten werden. Dies konnte, zum Beispiel bei etwas geringeren Strömungsgeschwindigkeiten des Abgases, jedoch in Dauerhaltbarkeitsversuchen nachgewiesen werden.

Weiter sind nur in wenigstens einem, von der Stirnseiten beabstandeten, Teilabschnitt Hartlotverbindungen zwischen der wenigstens einen Lage und dem zumindest einen Gehäuse vorgesehen. Das heißt beispielsweise, dass die wenigstens eine Lage im mittleren Bereich zwischen den Stirnseiten mit einem umlaufenden Teilabschnitt ausgeführt ist. Diese Hartlotverbindungen werden bevorzugt zwischen den Enden der wenigstens einen Lage und dem Gehäuse gebildet. Bei dieser Ausgestaltung ist es insbesondere vorteilhaft, wenn die Lagen eine Mehrzahl zumindest teilweise strukturierte Metallfolien umfassen, die mit beiden Enden jeweils an dem Gehäuse über den Teilabschnitt befestigt sind. Grundsätzlich können jedoch auch andere Materialien zum Aufbau der Lagen herangezogen werden, wie z.B. Drahtgewebe, Vliese, etc..

Weiter wird vorgeschlagen, dass der lotfreie Bereich eine mittlere Bereite kleiner als 10 % der Erstreckung aufweist. Damit beträgt die mittlere Breite bevorzugt höchstens 10 mm und liegt bevorzugt im Bereich von 5 mm bis 10 mm. Zumeist ist es jedoch vorteilhaft, mit zunehmenden Erstreckung auch eine größere mittlere Breite zu wählen.

Nach einer weiteren Ausgestaltung des Wabenkörpers werden Hartlotverbindungen ausgehend von der Stirnseite zum Teil in die Kanäle hinein ausgebildet. Dabei umfasst die wenigstens eine hartgelötete Zone mindestens 60 %, vorzugsweise 80 % der Stirnseite.

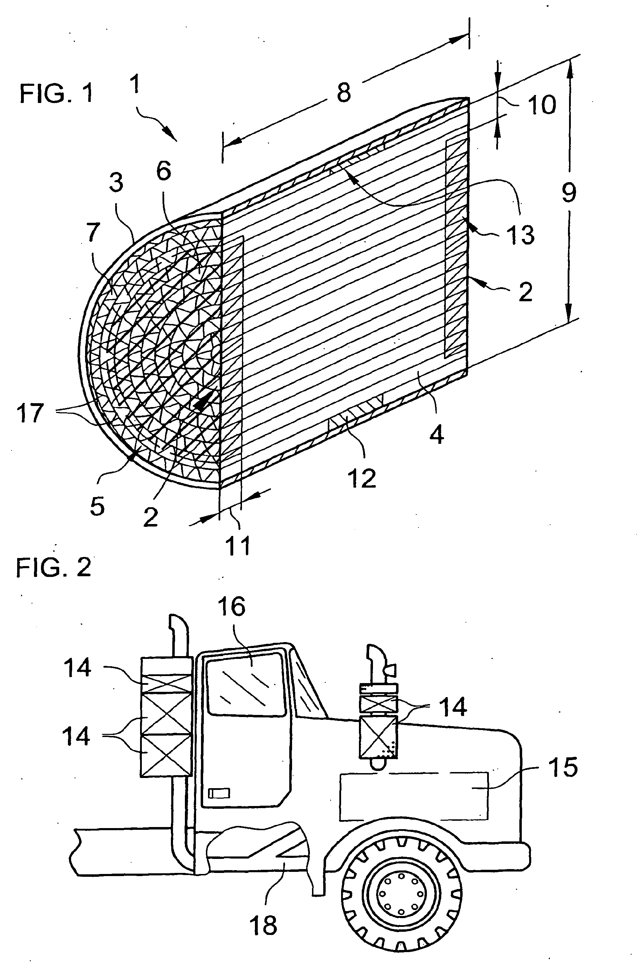

Vorteilhaft ist es ebenfalls, wenn der Wabenkörper nur jeweils eine gelötete Zone an den Stirnseiten und einen davon beabstandeten gelöteten Teilabschnitt mit Hartlotverbindung zwischen der wenigstens einen Lage und dem zumindest einen Gehäuse aufweist. Bei einer solchen Ausgestaltung des Wabenkörpers kann im Innenbereich ein sehr großer "flexibler Bereich" geschaffen werden, wobei gleichzeitig mit relativ geringem Hartlot-Einsatz eine dauerhafte Fixierung der metallischen Lagen zu dem Gehäuse gewährleistet ist. Nähere Informationen hierzu können insbesondere auch der Beschreibung zu Fig. 1 entnommen werden.

Besonders vorteilhaft ist eine Abgasbehandlungskomponente für eine Verbrennungskraftmaschine, die einen solchen erfindungsgemäßen Wabenkörper umfasst. Als Abgasbehandlungskomponente kommen insbesondere katalytische Konverter, Filter, Partikelfallen, Absorber, Teile eines Reformers oder einer Brennstoffzelle, Strömungsmischer, Wärmetauscher und dergleichen in Betracht. Aufgrund der vorstehend und nachfolgend beschriebenen Vorteile des Wabenkörpers und der Abgasbehandlungskomponente ist insbesondere ein Einsatz in einem Kraftfahrzeug vorgeschlagen.

Nach einem weiteren Aspekt der Erfindung wird ein Verfahren zur Herstellung eines erfindungsgemäßen Wabenkörpers vorgeschlagen, welches zumindest folgende Schritte umfasst:
- Applizieren von Hartlot in zumindest einen Teilabschnitt des Gehäuses,
- Wickeln oder Winden der wenigstens einen metallischen Lage,
- wenigstens teilweises Einfügen der metallischen Lage in das Gehäuse,
- Beloten wenigstens einer Zone über eine Stirnseite, wobei ein am Gehäuse angrenzender, bandförmiger lotfreier Bereich erzeugt wird,
- Erhitzen des Wabenkörpers zur Ausbildung von Hartlotverbindungen in wenigstens einen Teilabschnitt und in der wenigstens einen Zone.

Beim Applizieren von Hartlot wird bevorzugt ein streifenförmiges Lotmaterial auf die Innenseite des Gehäuses aufgetragen. Alternativ dazu kann dieses Hartlot auch auf den Außenumfang der zuvor gewickelten bzw. gewundenen metallischen Lage aufgegeben sein. Bevorzugt werden die Mehrzahl von metallischen Lagen (ggf. mit mehreren Stapeln) so gewickelt oder gewunden, dass diese eine beispielsweise S-förmige, V-förmige oder eine ähnliche Gestalt annehmen und beim Einfügen in das Gehäuse mit ihren Enden jeweils das Gehäuse berühren. Beim Beloten der wenigstens eine Zone kann mit einem Stempel ein Haftmittel aufgegeben und anschließend pulverförmiges Lot zugegeben werden, so dass dieses an den beleimten Zonen haften bleibt. Bevorzugt wird nur eine einzelne Zone an jeder Stirnseite vorgesehen, die mit Lot beaufschlagt wird. Das anschließende Erhitzen des Wabenkörpers erfolgt vorteilhafter Weise in einem Hochtemperatur-VakuumOfen, wobei an den Stellen, an den Hartlot vorgesehen ist, die Hartlotverbindungen ausgebildet werden. Neben diesen Hartlotverbindungen können, beispielsweise in den nicht beloteten Bereichen, andere Verbindungen generiert werden, wie beispielsweise Diffusionsanbindungen. Solche Diffusionsanbindungen unterstützen die Dauerhaltbarkeit des Wabenkörpers auch bei hohen thermischen und dynamischen Belastungen.

Die Erfindung sowie das technische Umfeld werden nachfolgend anhand der Figuren näher erläutert. Die Figuren zeigen besonders bevorzugte Ausführungsvarianten, auf die die Erfindung jedoch nicht begrenzt ist. Es zeigen schematisch:
- Fig. 1:: eine Ausführungsvariante eines Wabenkörpers, und
- Fig. 2:: eine bevorzugte Applikation eines solchen Wabenkörpers als Abgasbehandlungskomponente eines Kraftfahrzeugs.

Fig. 1 zeigt perspektivisch und in einer Schnittdarstellung einen spiralig gewickelten Wabenkörper 1, der gewellte und glatte Metallfolien 17 umfasst, die Lagen 5 mit einer Vielzahl von Kanälen 4 bilden. Diese Lagen 5 sind mit dem Gehäuse 3 fügetechnisch verbunden, nämlich insbesondere hartgelötet.

Der Wabenkörper 1 weist ein charakteristisches Lötmuster auf, welches durch die an den Stirnseiten 2 befindlichen Zonen 6 und einen dazwischen liegenden, an Umfang entlang laufenden Teilabschnitt 12 gebildet ist und mit denen die gewünschten Hartlotverbindungen 13 generiert sind. Das besondere bei diesem Lötmuster ist, dass die hartgelöteten Zonen 6 jeweils einen am Gehäuse 3 angrenzenden, bandförmigen lotfreien Bereich 7 bilden. Das heißt mit anderen Worten, dass ein hier reisförmiger Streifen gebildet ist, in denen keine Hartlotverbindungen ausgebildet sind. Insoweit grenzt kein Abschnitt der hartgelöteten Zone 6 unmittelbar eine den äußeren Rand des Wabenkörpers 1 bzw. das Gehäuse 3. Die hartgelötete Zone 6 wird ausgehend von der Stirnseite 2 bis in eine Tiefe 11 in den Wabenkörper 1 hinein ausgebildet. Dabei ist die Tiefe 11 der Zone 6 an beiden Stirnseiten 2 bevorzugt betragsmäßig gleich. Auch der bandförmige lotfreie Bereich ist umlaufend mit einer gleichmäßigen Breite 10 ausgeführt, die bevorzugt im mittleren Bereich kleiner als 10 % der Erstreckung 9 beträgt.

Bei dem erfindungsgemäßen Wabenkörper 1 handelt es sich insbesondere um einen, bei dem die Länge 8 deutlich kleiner als die maximale Erstreckung 9 ausgeführt ist. So beträgt beispielsweise das Verhältnis von Erstreckung zu Länge mindestens 2, bevorzugt mindestens 3,5. Die Länge 8 wird im Wesentlichen durch die beiden Stirnseiten 2 definiert. Die maximale Erstreckung 9 wird bevorzugt ebenfalls auf eine Stirnseite 2 bezogen, wobei bei ungleichen Stirnseiten 2 und/oder poligonalen Formen der Stirnseiten 2 jeweils die größtmögliche Erstreckung 9 gemeint ist.

Fig. 2 zeigt nun ein bevorzugtes Einsatzgebiet derartiger großer Wabenkörper 1 als Abgasbehandlungskomponente 14 für eine Verbrennungskraftmaschine 15 in einem Kraftfahrzeug 16, insbesondere einem Lastkraftwagen oder Bus. Das in der Verbrennungskraftmaschine 15 erzeugte Abgas wird über eine entsprechende Abgasanlage 18 hin zu einer Mehrzahl von Abgasbehandlungskomponenten 14 wie beispielsweise katalytische Konvertern, Filtern oder dergleichen zugeführt. Durch den Kontakt mit den Abgasbehandlungskomponenten 14 wird das Abgas gereinigt bzw. so behandelt, dass es schließlich an die Umgebung abgegeben werden kann.

### Bezugszeichenliste

- 1: Wabenkörper
- 2: Stirnseiten
- 3: Gehäuse
- 4: Kanal
- 5: Lage
- 6: Zone
- 7: Bereich
- 8: Länge
- 9: Erstreckung
- 10: Breite
- 11: Tiefe
- 12: Teilabschnitt
- 13: Hartlotverbindungen
- 14: Abgasbehandlungskomponente
- 15: Verbrennungskraftmaschine
- 16: Kraftfahrzeug
- 17: Metallfolie
- 18: Abgasanlage

## Patentansprüche

1. Wabenkörper (1) mit zwei gegenüberliegenden Stirnseiten (2) umfassend zumindest ein Gehäuse (3) und wenigstens eine Kanäle (4) bildende metallische Lage (5), wobei der Wabenkörper (1) nur an mindestens einer Stirnseite (2) wenigstens eine hartgelötete Zone (6) innerhalb der wenigstens einen Lage (5) aufweist, die einen am Gehäuse (3) angrenzenden, bandförmigen lotfreien Bereich (7) bildet, wobei der bandförmige lotfreie Bereich (7) eine Mehrzahl von der mindestens einen Lage (5) gebildeten Kanäle (4) umfasst; und weiter nur in wenigstens einem, von der weinigstens einen Zone (6) beabstandeten, Teilabschnitt (12) Hartlotverbindungen (13) zwischen der wenigstens einen Lage (5) und dem zumindest einen Gehäuse (3) vorgesehen sind.

2. Wabenkörper (1) nach Patentanspruch 1, bei dem die zwei gegenüberliegenden Stirnseiten (2) eine Länge (8) des Wabenkörpers (1) begrenzen und der Wabenkörper (1) eine maximale Erstreckung (9) senkrecht zur Länge (8) aufweist, wobei ein Verhältnis von Erstreckung (9) zu Länge (8) mindestens 2 beträgt.

3. Wabenkörper (1) nach Patentanspruch 1 oder 2, bei dem der lotfreie Bereich (7) eine mittlere Breite (10) kleiner 10% der Erstreckung (9) aufweist.

4. Wabenkörper (1) nach einem der vorhergehenden Patentansprüche, bei dem die wenigstens eine hartgelötete Zone (6) mit einer Tiefe (11) von höchstens 10 Millimeter ausgeführt ist.

5. Wabenkörper (1) nach einem der vorhergehenden Patentansprüche, bei dem dieser nur jeweils eine gelötete Zone (6) an den Stirnseiten (2) und einen davon beabstandeten gelöteten Teilabschnitt (12) mit Hartlotverbindungen (13) zwischen der wenigstens einen Lage (5) und dem zumindest einen Gehäuse (3) aufweist.

6. Abgasbehandlungskomponente (14) für eine Verbrennungskraftmaschine (15) umfassend einen Wabenkörper (1) nach einem der vorhergehenden Patentansprüche.

7. Kraftfahrzeug (16) umfassend einen Wabenkörper (1) nach einem der Patentansprüche 1 bis 5 oder eine Abgasbehandlungskomponente (14) nach Patentanspruch 6.

8. Verfahren zur Herstellung eines Wabenkörpers (1) nach einem der Ansprüche 1 bis 5 umfassend zumindest folgende Schritte:
- Applizieren von Hartlot in zumindest einem Teilabschnitt (12) des Gehäuses (3),
- Wickeln oder Winden der wenigstens einen metallischen Lage (5),
- wenigstens teilweises Einfügen der metallischen Lage (5) in das Gehäuse (3),
- Beloten wenigstens einer Zone (6) über eine Stirnseite (2), wobei ein am Gehäuse (3) angrenzender, bandförmigen lotfreier Bereich (7) erzeugt wird,
- Erhitzen des Wabenkörpers (1) zur Ausbildung von Hartlotverbindungen (13) im wenigstens einen Teilabschnitt (12) und in der wenigstens einen Zone (6).

## Claims

1. A honeycomb body (1) with two opposite end sides (2) comprising at least one housing (3) and at least one metallic layer (5) which forms ducts (4), wherein said honeycomb body (1) having at least one hard-soldered zone (6) only at at least one end side (2) within the at least one layer (5), said hard-soldered zone (6) forms a strip-shaped solder-free region (7) adjacent to the housing (3), wherein the strip-shaped solder-free region (7) comprises a plurality of the ducts (4), which are formed by the at least one metallic layer (5); and further wherein hard solder connections (13) are provided between the at least one layer (5) and the at least one housing (3) only in at least one partial section (12) which is spaced apart from the at least one zone (6).

2. The honeycomb body (1) as claimed in patent claim 1, in which the two opposite end sides (2) delimit a length (8) of the honeycomb body (1) and the honeycomb body (1) has a maximum extent (9) perpendicular to the length (8), with a ratio of extent (9) to length (8) being at least 2.

3. The honeycomb body (1) as claimed in patent claim 1 or 2, in which the solder-free region (7) has an average width (10) of less than 10% of the extent (9).

4. The honeycomb body (1) as claimed in one of the preceding patent claims, in which the at least one hard-soldered zone (6) is formed with a depth (11) of at most 10 millimeters.

5. The honeycomb body (1) as claimed in one of the preceding patent claims, in which said honeycomb body (1) has only in each case one soldered zone (6) at the end sides (2) and, spaced apart therefrom, a soldered partial section (12) with hard solder connections (13) between the at least one layer (5) and the at least one housing (3).

6. An exhaust-gas treatment component (14) for an internal combustion engine (15) comprising a honeycomb body (1) as claimed in one of the preceding patent claims.

7. A motor vehicle (16) comprising a honeycomb body (1) as claimed in one of patent claims 1 to 5 or an exhaust-gas treatment component (14) as claimed in patent claim 6.

8. A method for producing a honeycomb body (1) according to one of the patent claims 1 to 5 comprising at least the following steps:
- applying hard solder in at least one partial section (12) of the housing (3),
- winding or coiling the at least one metallic layer (5),
- at least partially inserting the metallic layer (5) into the housing (3),
- soldering at least one zone (6) by means of one end side (2), with a strip-shaped solder-free region (7), which adjoins the housing (3), being generated,
- heating the honeycomb body (1) in order to form hard solder connections (13) in at least one partial section (12) and in the at least one zone (6).

## Revendications

1. Corps en nids d'abeilles (1) avec deux faces frontales opposées (2), comprenant au moins un boîtier (3) et au moins une couche métallique (5) formant des canaux (4), le corps en nids d'abeilles (1) ne présentant que sur au moins une face frontale (2) au moins une zone de brasage fort (6) à l'intérieur de l'au moins une couche (5) qui forme une région (7) en forme de bande exempte de métal d'apport de brasage et adjacente du boîtier (3), dans quel cas la région en forme de bande et exempte de métal d'apport de brasage (7) comprend une pluralité de canaux (4) formés à partir de l'au moins une couche (5) ; et en outre au moins dans une section partielle (12), à distance de l'au moins une zone (6), des liaisons de brasage fort (13) sont prévues entre l'au moins une couche (5) et l'au moins un boîtier (3).

2. Corps en nids d'abeilles (1) selon la revendication 1, dans le cas duquel les deux faces frontales opposées (2) limitent une longueur (8) du corps en nids d'abeilles (1) et le corps en nids d'abeilles (1) présente une extension maximale (9) perpendiculaire à la longueur (8), un rapport entre l'extension (9) et la longueur (8) comportant au moins 2.

3. Corps en nids d'abeilles (1) selon la revendication 1 ou 2, dans le cas duquel la région (7) exempte de métal d'apport de brasage a une largeur moyenne (10) plus petite que 10 % de l'extension (9).

4. Corps en nids d'abeilles (1) selon l'une des revendications précédentes, dans le cas duquel l'au moins une zone de brasage fort (6) est réalisée avec une profondeur (11) d'au maximum 10 millimètres.

5. Corps en nids d'abeilles (1) selon l'une des revendications précédentes, dans le cas duquel celui-ci ne présente que respectivement une zone brasée (6) sur les faces frontales (2) et une section partielle (12) brasée à distance de ces derniers avec des liaisons de brasage fort (13) entre l'au moins une couche (5) et l'au moins un boîtier (3).

6. Composant de traitement pour gaz d'échappement (14) pour une machine à combustion interne (15), comprenant un corps en nids d'abeilles (1) selon l'une des revendications précédentes.

7. Véhicule (16), comprenant un corps en nids d'abeilles (1) selon l'une des revendications 1 à 5 ou un composant de traitement pour gaz d'échappement (14) selon la revendication 6.

8. Procédé destiné à la fabrication d'un corps en nids d'abeilles (1) selon l'une des revendications 1 à 5, comprenant au moins les étapes suivantes :
- Appliquer du métal d'apport de brasage fort dans au moins une section partielle (12) du boîtier (3),
- enrouler ou incurver l'au moins une couche métallique (5),
- introduire au moins partiellement la couche métallique(5) dans le boîtier (3),
- garnir de brasure au moins une zone (6) à l'intermédiaire d'une face frontale (2), une région adjacente du boîtier (3), en forme de bande et exempte de métal d'apport de brasage (7) étant générée,
- chauffer le corps en nids d'abeilles (1) pour réaliser des liaisons de brasage fort (13) dans l'au moins une section partielle (12) et dans l'au moins une zone (6).
